# DEMANDE DE BREVET EUROPEEN

(11) **EP 0 607 770 A1**
(43) Date de publication de la demande: **27.07.1994**
(21) Numéro de dépôt: 93870206.5
(22) Date de dépôt: 22.10.1993
(51) Int. Cl.: F16L 29/00, F16K 5/06

(54) **Appareil de robinetterie à double fermeture**

(30) Priorité: 23.10.1992 BE 9200919
(71) Demandeur: BLAGDEN INDUSTRIES PUBLIC LIMITED COMPANY, St. Albans, Herts. AL1 3LR (GB)
(72) Inventeur: Wantiez, Bernard, B-9910 Mariakerke (BE); Van Britsom, Philippe, B-9000 Gent (BE)
(74) Mandataire: Plucker, Guy

(57) **Abrégé**

L'invention concerne un appareil de robinetterie à double fermeture. L'appareil suivant l'invention comporte un premier (2) et un second (3, 30, 37) organe de fermeture raccordés hermétiquement l'un à l'autre. Un organe de manoeuvre (4) unique permet d'actionner simultanément les deux moyens de fermeture, ce qui confère aux manipulations un double degré de sécurité. L'appareil comporte de surcroît un verrouillage (44) solidaire de l'organe de manoeuvre (4), de façon à empêcher toute déconnexion tant que l'appareil (1) n'est pas en position fermée.

## Description

L'invention concerne un appareil de robinetterie à double fermeture.

Un appareillage à double fermeture est notamment conseillé pour les raccordements dans des systèmes de transport, de stockage ou de transvasement de fluides, surtout lorsqu'i est raccordé à un volume en charge.

La double fermeture ne confère pas pour autant une sécurité absolue lors de la manutention de fluides. Un accident classique est que l'on omette de vérifier l'état de fermeture si multané de deux vannes ou encore que l'on entreprenne le démontage d'un raccord sur un volume en charge.

On connaît, par le document US-A-3897091 un dispositif de couplage pour camion citerne comportant un coupleur doté d'un cylindre intérieur coulissant; le cylindre du coupleur coopère avec le clapet d'une soupape, de façon à ce que la soupape ne puisse être ouverte par inadvertance sans le coupleur. Un dispositif de verrouillage à double levier permet de fixer et de détacher le coupleur de la soupape. Le dispositif de couplage suivant US-A-3897091 est relativement encombrant. Son mécanisme comporte un nombre important de pièces mobiles en contact avec le fluide, ce qui est une source d'ennui du point de vue de nettoyage et de la fiabilité, particulièrement dans le cas de fluides à viscosité faible. Un déverrouillage accidentel du coupleur en position ouverte n'est pas exclu.

Le document US-A-3402738 décrit un dispositif d'accouplement à valves pour éléments tubulaires. Ces éléments tubulaires sont rendus solidaires par un accouplement du type à baïonnette. Les éléments tubulaires du type décrit sont fermés chacun par un clapet pivotant autour d'un axe extérieur. Un système de transmission à crémaillère permet d'actionner les deux clapets simultanément. Ce type de dispositif est d'un encombrement important et ne permet pas régler le débit d'écoulement d'un fluide (essentiellement du gaz sous pression) passant d'un élément tubulaire à l'autre.

Le document BE-A-542673 décrit un raccord destiné 5 au raccordement d'un tuyau avec un réservoir de gaz. Le réservoir est muni d'un ajutage contenant une soupape normalement fermée comportant un robinet à tournant dont la tige fait office de came pour actionner le poussoir, un méplat pratiqué sur la tige du tournant permet de loger la tige du poussoir lorsque le robinet est en position fermée. Ce méplat forme une lumière de dimensions réduites lorsque le robinet est en position ouverte.

Une caractéristique commune aux dispositifs de couplages existants décrits dans l'état de la technique est qu'ils sont absolument incompatibles avec d'autres dispositifs existants.

Un des buts de l'invention est la mise au point d'un appareil de robinetterie qui simplifie les manoeuvres et réduise donc en grande partie les risques d'erreurs.

Un autre but de l'invention est d'empêcher la déconnexion sans coupure absolue de deux parties d'un circuit de fluide.

Un autre but de l'invention est que cet appareil puisse être aisément substitué à des pièces de robinetterie existantes, notamment sur des récipients.

Un autre but de l'invention est de réaliser un tel appareil qui soit très compact qui résiste donc bien aux sollicitations et aux chocs.

L'invention a pour objet un appareil de robinetterie à double fermeture qui comporte :
- un premier organe de fermeture traversé axialement par un conduit adapté au passage d'un fluide, ledit premier organe de fermeture comportant un corps et un clapet apte à coopérer avec un siège pourfermer hermétiquement le conduit, ledit clapet étant maintenu en place sur le siège par des moyens de rappel axiaux;
- un second organe de fermeture apte à être raccordé hermétiquement en aval du premier organe;
- un organe de manoeuvre de ce second organe de fermeture et des moyens de transmission aptes à provoquer l'ouverture ou la fermeture du premier organe de fermeture simultanément à celle du second organe, lorsque l'organe de manoeuvre de celui-ci est actionné.

Dans l'appareil de robinetterie de l'invention, le second organe de fermeture comporte un obturateur rotatif placé de façon à pouvoir obturer un passage.

Les moyens de transmission comportent une came solidaire de l'obturateur tournant et un organe de transmission, dont la position est déterminée par la came, est disposé suivant l'axe du conduit et de l'entrée du passage entre le clapet de la soupape et la came.

Le second organe de fermeture est suivant une forme de réalisation, un robinet à papillon.

L'obturateur tournant peut avoir, en substance, une forme sphérique, cet obturateur étant percé par une lumière apte à venir en regard de l'entrée du passage, le profil de la came s'étendant alors au moins partiellement en travers de la lumière de l'obturateur.

Suivant une autre forme de réalisation, le second organe de fermeture est un robinet à boisseau, l'obturateur de ce robinet étant percé d'une manière apte à venir en regard de l'entrée du passage; la came s'étend alors au moins partiellement en travers de la lumière de l'obturateur.

Dans le cas décrit ci-dessus, l'obturateur du robinet à boisseau peut avoir, en substance, une forme cylindrique ou tronconique.

Suivant une forme de réalisation avantageuse, le passage traversant le robinet s'étend en substance suivant un axe rectiligne de l'entrée du robinet jusqu'à sa sortie.

Suivant une autre forme de réalisation, le passage s'étend, à partir de la lumière, suivant l'axe de pivotement de l'obturateur.

L'organe de transmission comporte de préférence deux parties aboutées l'une à l'autre, solidaires respectivement du robinet à soupape et du robinet à tournant et soutenues chacunes par des moyens de guidage.

L'appareil de robinetterie suivant l'invention comporte de façon avantageuse des moyens de verrouillage aptes à empêcher la désolidarisation du premier et du second organe de fermeture lorsqu'ils sont en position d'ouverture.

Ces moyens de verrouillage sont de préférences solidaires d'un organe de manoeuvre manuel.

Ces moyens de solidarisation démontables consistent suivant une forme de réalisation en des pièces filetées correspondantes; les moyens de verrouillages comportent alors au moins une dent rétractable solidaire de l'organe de manoeuvre et une pluralité de crans ménagés sur un des moyens de solidarisation; de façon telle que, lorsque l'organe de manoeuvre est dans une position correspondant à l'ouverture de l'appareil, la dent rétractable est engagée dans un de ces crans et empêche le déplacement relatif des moyens de solidarisation.

Les moyens de verrouillage comportent de préférence une pluralité de dents rétractables disposées sur un secteur de sorte que l'organe de manoeuvre puisse être immobilisé par rapport au crantage dans différentes positions angulaires correspondant à autant de débits relatifs de l'appareil.

L'invention a également pour objet un organe de fermeture pour appareil de robinetterie à double fermeture comportant un corps traversé par un passage dont au moins un tronçon initial est droit, un obturateur pivotant dans ledit passage autour d'un axe perpendiculaire au tronçon initial de ce passage; un organe de manoeuvre agit sur ledit obturateur; l'obturateur comporte une came disposée dans un plan perpendiculaire à son axe de pivotement et un organe de transmission disposé suivant l'axe du tronçon initial de ce passage et supporté par des moyens de guidage longitudinaux si bien que cet organe transforme en déplacements linéaires aptes à actionner un second organe de fermeture les variations de profil de la came. Le profi est tel que l'organe de transmission est en élongation maximum lorsque l'organe obturateur est en position "ouverte" et en élongation minimale lorsque l'organe obturateur est en position fermée.

Un avantage de l'invention est que si l'appareil est monté sur un récipient ou une conduite destinée à être transporté, le second organe de fermeture peut être aisément désolidarisé de premier et remplacé par un bouchon, ce qui permet un important gain de place et réduit le danger de chocs et de bris durant le transport.

Un autre avantage est que les organes de transmission sont disposés à l'intérieur du conduit d'écoulement et qu'ils sont de ce fait protégés de toute atteinte et des chocs extérieurs.

Un autre avantage est que la construction de l'appareil s'adapte aussi bien au métal qu'aux matières plastiques, ce qui permet de t'utiliser avec virtuellement n'importe quel fluide.

Un autre avantage, lié à l'usage d'éléments fortement standardisés, est qu'il est possible d'inter- changer entre eux différents types de robinets, en fonction notamment du fluide, des quantités à soutirer, etc.

Un autre avantage est que les pièces caractéristiques de l'invention peuvent être montées virtuellement sans transformation dans des corps de robinets standards, d'où un gain important tant sur le prix de revient qu'au stockage.

D'autres particularités et avantages de l'invention ressortirent de la description ci-après de formes d'exécutions particulières, référence étant faite aux dessins annexés, dans lesquels :
la Fig. 1 est une vue latérale en coupe axiale d'un appareil de robinetterie suivant l'invention avec robinet à boule, en position fermée;
la Fig. 2 est une vue latérale en coupe de même appareil qu'à la Fig. 1, en position ouverte;
la Fig. 3 est une vue du dessus, en coupe axiale du même appareil qu'à la Fig. 2;
la Fig. 3a est une vue en perspective de l'obturateur du robinet des Fig. 1, 2, 3;
la Fig. 4 est une vue latérale, en coupe axiale, d'un appareil de robinetterie suivant l'invention avec robinet à boisseau, en position fermée;
la Fig. 5 est une vue latérale en coupe axiale de l'appareil de la Fig. 4, en position ouverte;
la Fig. 6 est une vue du dessus, en coupe axiale de l'appareil de la Fig. 5;
la Fig. 7 est une vue latérale en coupe axiale d'un appareil de robinetterie suivant l'invention avec robinet papillon, en position fermée;
la Fig. 8 est une vue latérale, en coupe axiale, de l'appareil de la Fig. 7, en position ouverte;
la Fig. 9 est une vue de dessus en coupe axiale de l'appareil de la Fig. 8;
la Fig. 10 est une vue latérale d'un appareil de robinetterie suivant l'invention avec vue complète du verrouillage, en position d'ouverture;
la Fig. 11 est une vue du dessus de l'appareil de la Fig. 10;
la Fig. 12 est une vue latérale de l'appareil de robinetterie de la Fig. 10 au moment de la manoeuvre;
la Fig. 13 est une vue latérale en coupe suivant un plan axial de l'appareil de robinetterie, paré pour les manipulations, et
la Fig. 14 est une vue de face, avec arrachement, de l'appareil de la Fig. 13.

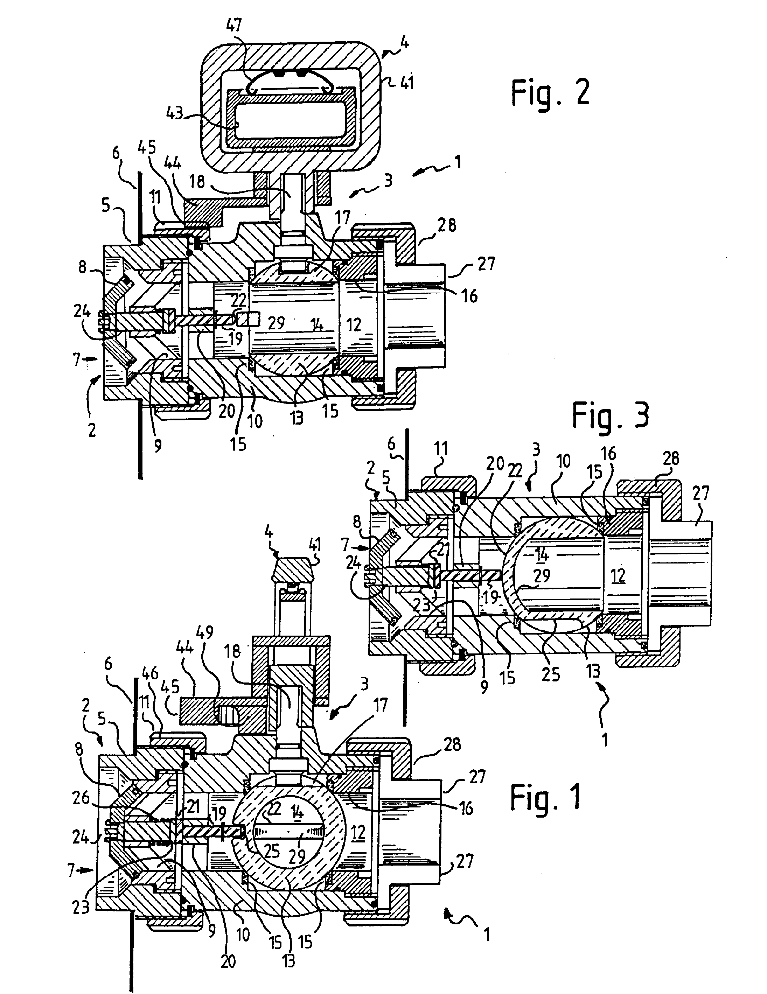

La Fig. 1 montre, en coupe, un appareil de robinetterie à double sécurité suivant l'invention, en position fermée.

L'appareil 1 est constitué essentiellement de deux robinets assemblés en série, à savoir, un robinet à soupape 2 du côté amont et un robinet 3 à obturateur pivotant du côté aval. Ces deux organes 2, 3 sont agencés de façon à pouvoir être actionnés simultanément par un organe de manoeuvre unique 4, comme on le verra ci-après.

Le corps 5 du robinet à soupape 2 est fixé du côté amont par des moyens de fixation démontables (non représentés) à un support 6 (en l'occurrence, la paroi d'une enceinte contenant un fluide). Ce corps 5 est percé de part en part par un conduit 7. Au travers de ce conduit est disposé un clapet 8, lequel vient s'appliquer hermétiquement sur un siège annulaire 9 de façon à empêcher le passage d'un fluide vers l'aval. Le corps 10 du robinet à obturateur pivotant 3 est fixé de façon hermétique par un collier fileté 11 au corps 5 du robinet à soupape. L'axe d'un passage 12 traversant le robinet 3 est aligné avec celui du conduit 7 du robinet à soupape 2.

Une sphère 13 percée d'une lumière 14 constitue l'organe obturateur pivotant du robinet 3.

Le robinet 3 étant fermé, la lumière 14 est orientée perpendiculairement au passage 12.

L'herméticité du robinet 3 est assurée par des joints circulaires 15 entre lesquels la sphère 13 est serrée. Un de ces joints 15 est monté sur une couronne 16 ajustable par rapport au corps 10. On remarquera que cette couronne 16 est montée en aval de la sphère 13 de façon à rester aisément accessible en toute sécurité même lorsque l'appareil 1 est en charge du côté amont.

L'organe de manoeuvre 4 commande, par le biais d'une glissière 17 ménagée au somment de la sphère 13, la position de ladite sphère 13, qu'il peut faire pivoter suivant l'axe 18, lequel est disposé perpendiculairement au passage 12.

Un organe de transmission s'étend axialement entre la sphère 13 et le clapet 8 du robinet à soupape 2. Il comprend une première tige de transmission 19 guidée axialement par un manchon 20.

L'extrémité de cette tige de transmission 19 s'appuye sur la surface de la sphère 13 et plus précisément sur une came 22 qui s'étend le long de la sphère 13 et au travers de la lumière 14, suivant un plan équatorial perpendiculaire à l'axe de pivotement 18 de l'obturateur 13. L'autre extrémité de cette tige 19 se termine par une tête 21. La tête 21 de la tige de transmission 19 appuye de son côté contre la tête correspondante 23 d'une deuxième tige 24 fixée par crochets élastiques sur le clapet 8 du robinet à soupape 2.

Tout déplacement des tiges aboutées 19, 24 se traduit donc par une sollicitation sur le clapet 8.

La came 22 est profilée de façon telle que lorsque l'obturateur 13 est en position fermée, tel que montré à la Fig. 1, la tige de transmission 19 est en extension minimum par rapport à l'axe de pivotement 18 de la sphère 13. De fait, lorsque la sphère 13 est dans cette position, l'extrémité de la tige de transmission 19 est enfoncée dans une entaille 25 ménagée sur le flanc de la sphère 13. Sa tête 21 n'exerce donc pas de force appréciable sur la deuxième tige 24, ni donc sur le clapet 8. Le clapet 8 reste donc appliqué de façon hermétique sur son siège 9, sollicité qu'il est par la pression du fluide en amont et également par le ressort 26 qui agit comme moyen de rappel sur la tige 24.

A la Fig. 2, l'appareil 2 est ouvert. La sphère 13 a subi via l'organe de manoeuvre 4 un pivotement de 90°. De ce fait, la lumière 14 de la sphère 13 est orientée dans l'axe du passage 12 et rien ne s'oppose donc à l'écoulement d'un fluide au travers du robinet 3. Simultanément, la tige de transmission 19, subissant passivement la rotation de la came 22 s'est déplacée longitudinalement d'un point d'extension minimale (l'entaille) à un point d'extension maximal (la surface de la sphère). Guidée par son manchon 20, elle a repoussé la deuxième tige 24 et provoqué ainsi le recul du clapet 8 par rapport au siège 9. Le robinet à soupape 2 et le robinet à obturateur rotatif 3 ont donc été amenés en position d'ouverture simultanée grâce à une manoeuvre unique, ce qui réduit bien de façon significative les risques d'erreur auxquels un opérateur peut se trouver confronté.

L'orifice de sortie de l'appareil 1 peut être relié vers l'aval à une canalisation de distribution ou à tout autre dispositif tel que bec de déversement, récipients, etc., (non représentés) grâce à un organe de raccordement étanche tel que la bride 27, laquelle est serrée contre' le corps 10 du robinet à obturateur rotatif 3 par un collier fileté 28, tel que montré aux Fig. 1 à 9.

Il est évident, toutefois, que le dispositif 1 peut être muni de tout autre organe de raccordement adéquat.

La Fig. 3 représente également l'appareil 1 en position ouverte et permet de bien visualiser la configuration particulière de la came 22 associée à la sphère 13 obturatrice. Une première partie de la came 22 suit le fond de l'entaille 25 ménagée dans le flanc de la sphère 13. Elle remonte ensuite sur la surface extérieure de la sphère et poursuite sa course sur un arceau 29 qui s'étend en travers de la lumière 14. On peut remarquer que tout le long de cet arceau 29, le profil de la came suit le diamètre équatorial de la sphère, ce qui provoque l'extension maximale de la tige de transmission 19. Cette position d'extension maximale de la tige 19 est maintenue sur près de la moitié de la longueur de la came 22, ce qui permet, en pratique, de jouer, via l'organe de manoeuvre 4, sur la position angulaire de la sphère obturatrice 13 pour faire varier le débit du robinet 3 tout en maintenant la soupape 2 en position de plein ouverture. L'appareil 1 joue donc à la fois le rôle d'un organe d'ouverture/fermeture et celui de régulateur de débit.

La Fig. 3a montre isolément, en perspective, la sphère 13 traversée par la lumière 14 et la came 22 se prolongeant en partie dans l'entaille 25, en partie sur l'arceau 29 qui enjambe la lumière 14.

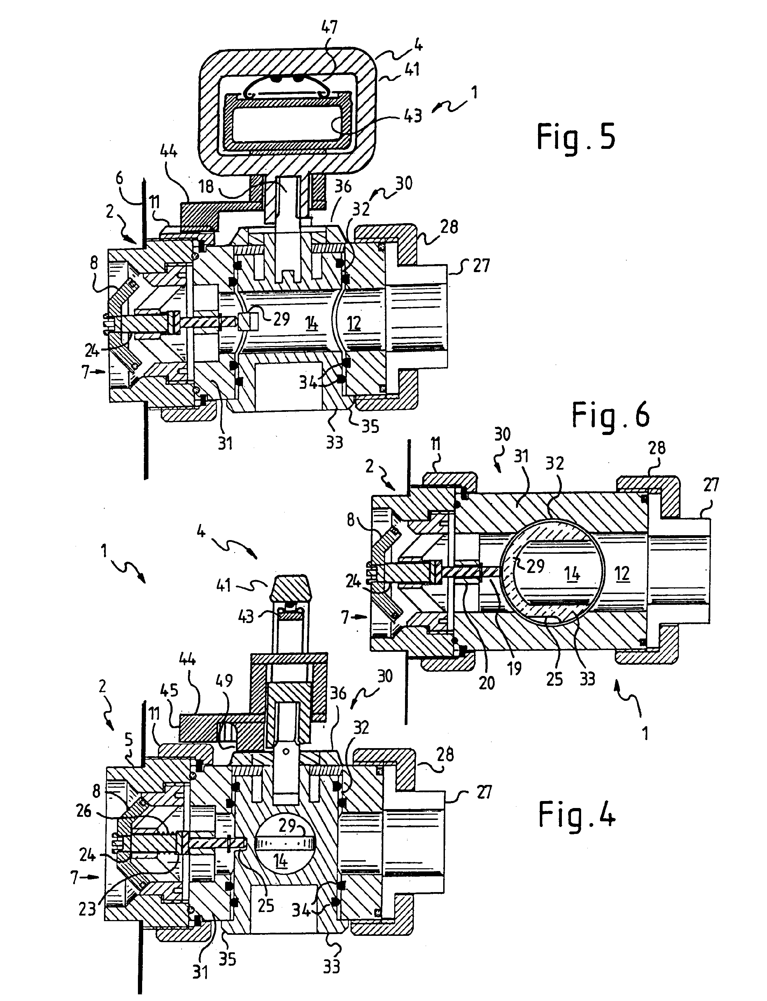

Les Fig. 4, 5 et 6 montrent, en coupe et sous différents angles, un autre mode de réalisation d'un appareil suivant l'invention, comportant deux organes de fermeture qui sont en l'occurrence un robinet à soupape 2 et un robinet à boisseau 30.

A la Fig. 4, le dispositif est représenté fermé, cependant qu'il est ouvert aux Fig. 5 et 6.

Le corps ou boisseau 31 de ce robinet 30 est traversé de part en part par une cavité cylindrique 32. Dans cette cavité 32 est insérée une noix cylindrique 33, laquelle est percée une lumière 12. Le pivotement de la noix cylindrique 33, obtenu en agissant sur l'organe de manoeuvre 4, permet d'amener la lumière 14 en travers d'un passage 12 (soit en position fermée, comme à la Fig. 4) ou en regard de ce passage 12 (soit, en position d'ouverture comme aux Fig. 5 et 6).

Des anneaux d'étanchéité du type O-ring 34 montés dans la cavité 32 et/ou sur la noix 33 assurent l'étanchéité du robinet à boisseau 30 dans son ensemble.

Le maintien en place de la noix 33 est assuré, d'un côté par une butée circulaire 35, et de l'autre par un écrou 36.

La came 22 destinée à actionner la tige de transmission 19 comporte une partie de diamètre plus réduit que celui de la noix 33; cette partie s'étend au fond de l'entaille 25. L'autre partie de la came 22, de diamètre égal à celui de la noix 33, suit un arceau 29 qui enjambe la lumière 14.

La présence d'un tel arceau 29 réduit dans une certaine mesure la section disponible pour l'écoulement du fluide, mais cet effet négatif peut être aisément limité par le choix d'une section adéquate de l'arceau 29, ce qui réduit les turbulences liées à l'écoulement.

Par ailleurs, la pointe de la tige 19 qui suit la came peut, suivant les circonstances, être munie d'une roulette ou d'une bille (de façon à réduire les frottements et donc la force nécessaire pour manoeuvrer l'organe de manoeuvre). Cette pointe peut également être munie d'une "fourchette" la came étant dans ce cas pourvue d'une saillie centrale.

Le fonctionnement d'un appareil 1 avec robinet à boisseau 30 (Fig. 4, 5, 6) est, en substance, identique à celui à sphère des Figures 1,2,3. Lorsque l'apparei 1 est fermé, tel que montré à la Fig. 4, la lumière 14 de la noix 33 est disposée transversalement par rapport au passage 12. La tige de transmission 19 se trouve à ce moment dans l'entaille 25, soit en un "point bas" de la came 22. En conséquence, la tige 24 de la soupape 2 ne reçoit pas de sollicitation autre que celle du ressort de rappel 26 et le clapet 8 reste appliqué hermétiquement sur son siège 9, assurant la double fermeture du dispositif 1.

Lorsqu'on désire amener le dispositif 1 en position d'ouverture, ou fait pivoter la noix 33 d'un quart de tour à l'aide de l'organe de manoeuvre 4. Lorsque la lumière 14 commence à veniren regard du passage 12, la tige de transmission 19 passe sur la partie "haute" de la came 22; elle est donc repoussée suivant l'axe du passage 12 en direction du robinet à soupape 2. Repoussant la tige 24, elle soulève le clapet 8 du robinet à soupape 2. La soupape 2 demeure ouverte cependant que la noix 33 peut être amenée jusqu'à une position de débit maximum, la lumière 14 étant alors exactement dans l'axe du passage 12, tel que représenté aux Fig. 5 et 6. On aura remarqué que la position des organes obturateurs (soit, selon le cas, la sphère 13 ou la noix 33) est répercutée sur le clapet par les deux tiges 19, 24 accolées bout à bout. Une telle disposition est particulièrement avantageuse lorsqu'on est amené à désaccoupler les deux parties de l'appareil (en l'occurrence le robinet à tournant et le robinet à soupape 2) en dévissant le collier 11. Dans ce cas, le système de transmission 19, 24 se scinde tout naturellement en deux et aucune des parties dissociées (3, 30), 2 ne présente d'organe en saillie, ce qui réduit les risques de bris ou de distorsion, fréquents dans les endroits où l'on peut être amené à utiliser l'appareil 1 (ateliers, usines, magasins, chantiers, etc.).

Dans le robinet à boisseau 30 représenté aux Fig. 4, 5, 6, le passage 12 traverse le corps 31 de part en part; ce passage est donc sensiblement rectiligne.

Il est cependant possible d'utiliser, au lieu du robinet à boisseau ordinaire 30, un robinet (non représenté) dont la noix comporte deux lumières d'équerre ou bien muni d'une noix défoncée (percée suivant l'axe de pivotement), ce qui permet un écoulement du fluide latéralement ou verticalement.

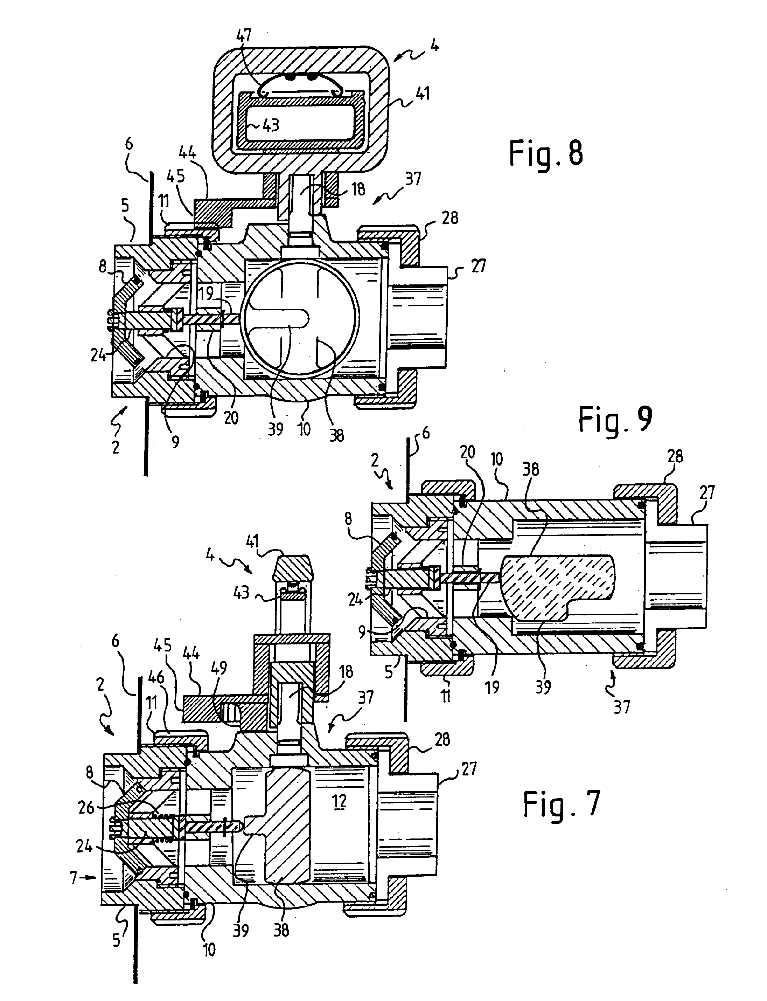

Les Fig. 7,8,9 montrent, en coupe axiale, une autre forme de réalisation de l'appareil de robinetterie 1 suivant l'invention, dont le robinet 37 est doté d'un obturateur papillon 38.

Le principe de fonctionnement de cet appareil de robinetterie reste identique à ce qui a été décrit précédemment, à cela près que la came 22 ne s'étend plus sur un arceau 29 mais sur une rampe 39, laquelle est érigée sur une des faces du papillon 38, perpendiculairement à celui-ci, et sur environ 90°. Lorsque le robinet 37 est fermé (Fig. 7), le papillon 38 est disposé transversalement par rapport au passage, qu'il obture complètement. La tige de transmission 19 s'appuye à ce moment sur une partie de la rampe 39 en plan coupé, qui constitue en fait un "point bas" de la came 22. Le robinet à soupape 2 est donc ipso facto en position fermée.

Lorsque le robinet à papillon 37 est en position "ouverte" (Fig. 8, 9), le plan médian du papillon 38 est aligné parallèlement à l'axe du passage 12 et il libère ainsi le passage pour l'écoulement d'un fluide.

A ce moment, la tige de transmission 16 ayant remonté passivement la rampe 39, se trouve sur la zone "haute" de la came 22 soit, comme on le voit aux Fig. 8 et 9, sur le périmètre du papillon 38, ce qui entraîne, par le biais de la tige 24, l'ouverture du robinet à soupape 2.

Ici également, la came 22 comporte un secteur en "point haut" suffisamment étendu pour permettre de faire varier la position angulaire du papillon 38, donc de régler le débit, tout en maintenant le robinet à soupape 2 constamment ouvert.

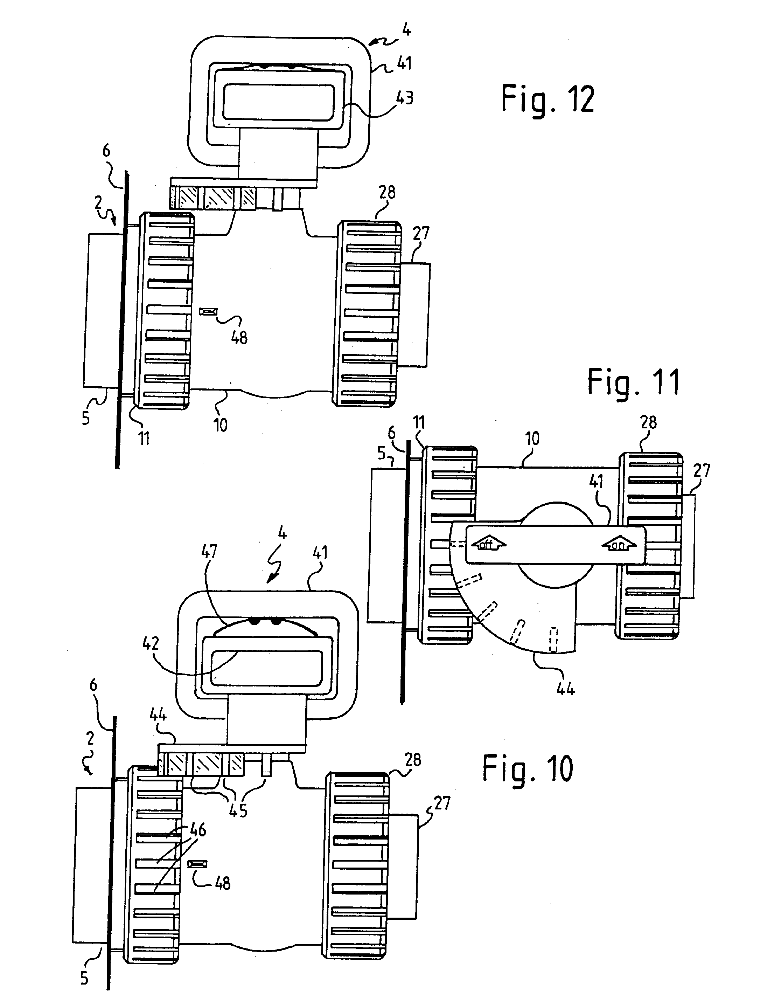

Les Fig. 10, 11 et 12 montrent, en complément avec les autres figures, l'agencement des organes de manoeuvre 4 qui permet au dispositif 1 de conserver une "double sécurité" sans faille, même en cas d'inattention de la part de l'opérateur.

Il serait inadmissible que le robinet 3, 30, 37 puisse être désolidarisé de la soupape 4 au moment où ces deux organes de fermeture sont ouverts.

Pour éviter ce genre d'erreur, le dispositif 1 est, d'abord, conventionnellement doté d'un organe de manoeuvre 4 non démontable dont la position (transversale ou dans l'axe du passage 12) est déjà en soi une indication pour l'opérateur averti.

Pour éliminer complètement la possibilité d'une fausse manoeuvre, l'organe 4 a la forme d'une poignée en deux parties : une partie dite "fixe" 41, solidaire de l'axe 18 monté sur l'obturateur 13, 33, 38 et une deuxième partie 43, mobile axialement par rapport à la première partie 41, et qui supporte un plateau en forme de secteur 44, lequel est muni à sa partie inférieure d'un certain nombre de dents 45. Ces dents 45 sont dimensionnées de façon à pouvoir engrener dans des crans 46 ménagés sur la face externe du collier fi leté 11 ou de modifier la position angulaire de l'organe de manoeuvre 4.

Des moyens élastiques 47 maintiennent la partie mobile de la poignée (et, de ce fait, le plateau en forme de secteur 44 qui en est solidaire) repoussée vers le bas.

Le secteur 44 est disposé de façon telle que lorsque l'organe de manoeuvre 4 est en position ouverte, i recouvre partiellement le collier fi leté 11. De ce fait, au moins une dent 45 est en position adéquate pour engrener dans un cran 46. Cette dent 45 reste engagée dans le cran du fait de la force exercée par les moyens élastiques 47, si bien qu'il est impossible de procéder au démontage du collier fileté 11 ou de modifier la position angulaire de l'organe de manoeuvre 4.

Pour dégager une dent 45 du cran 46 dans lequel elle est engagée, il est nécessaire de saisir et de serrer la poignée 4, ce qui a pour effet de ramener l'une contre l'autre la partie mobile 43 (voir Fig. 12) et la partie fixe 41 et de "débrayer" le plateau 44; on peut alors faire pivoter l'organe de manoeuvre 4 et l'amener dans la position désirée (ouverture, fermeture, débit partiel).

On remarquera que lorsque l'organe est près de la position "fermée", un bossage 49, prenant appui sur le corps du robinet (voir Fig. 1,4, 7), maintient automatiquement la partie mobile 43 en position relevée.

L'engrènement correct des dents 45 et des crans 46 est obtenu très simplement par la présence d'un repère de serrage 48 moulé ou estampé sur le corps de l'appareil 1.

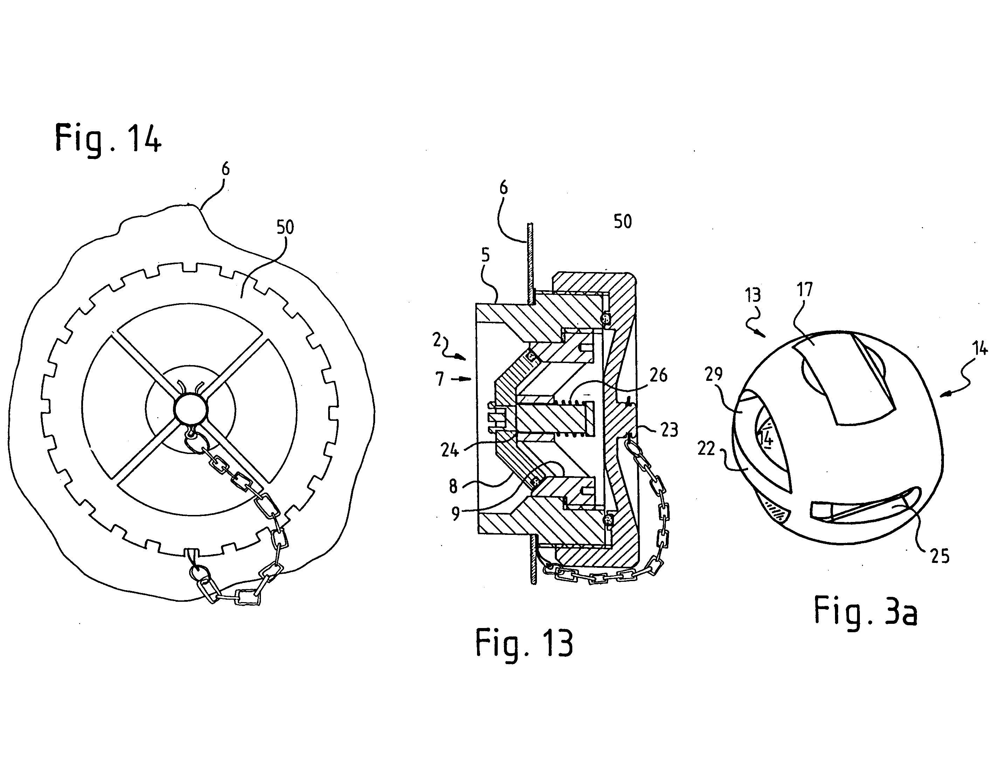

Les Fig. 13 et 14 montrent un appareil de robinetterie 1 fixé sur la paroi 6 d'un réservoir et paré pour le transport avec ledit réservoir. Le robinet à tournant 3, 30, 37 a été désolidarisé du robinet à soupape 2 et a été remplacé par un bouchon hermétique 50.

Même dans ces conditions l'appareillage conserve bien la sécurité découlant de la "double fermeture". Le bouchon 50, outre sa fonction de fermeture, protège la soupape 2 et son mécanisme 8, 9, 23, 24.

Lorsque le réservoir doit être remis en service, il est évidemment nécessaire de disposer de la partie de l'appareil complémentaire adaptable au robinet à soupape 2 pour avoir accès au fluide transporté. Durant le transport, l'inviolabilité de l'enceinte est garantie par la quasi-impossibilité qu'il y a d'y prélever du fluide tout en actionnant le clapet 8 du robinet à soupape 2.

Il va de soi que l'on prend soin de disposer de composants de l'appareil 1 interchangeables en divers points d'un réseau de transport ou de stockage si l'on ne désire pas avoir à transporter chaque fois un appareil à à double fermeture complet tout monté ou sous forme dissociée.

Il va de soi que l'invention concerne donc également chacune des deux parties de l'appareil 1 qui peuvent donc se retrouver séparées l'une de l'autre, mais qui doivent se retrouver assemblées pour que le dispositif retrouve sa fonction initiale.

## Revendications

1.- Appareil de robinetterie à double fermeture comportant :
- un premier organe de fermeture (2) traversé axialement par un conduit (7) adapté au passage d'un fluide, ledit premier organe de fermeture (2) comportant un corps (5) et un clapet (8) apte à coopérer avec un siège (9) pour fermer hermétiquement le conduit (7), ledit clapet (8) étant maintenu en place sur le siège (9) par des moyens de rappel axiaux (26).
- un second organe de fermeture (3, 30, 37) apte à être raccordé hermétiquement en aval du premier organe (2),
- un organe de manoeuvre (4) de ce second organe de fermeture (3, 30, 37);
- des moyens de transmission (19, 22, 24) aptes à provoquer l'ouverture ou la fermeture du premier organe de fermeture (2) simultanément à celle du second organe (3, 30, 37), lorsque l'organe de manoeuvre (4) de celui-ci est actionné,
caractérisé en ce que le second organe de fermeture (3,30,37) comporte un obturateur rotatif (13,33,38) capable d'obturer un passage (12) traversant ledit organe (3,30,37), les moyens de transmission (19, 22, 24) comportant une came (22) solidaire de l'obturateur tournant (13, 33, 38), un organe de transmission (19, 24) dont la position est déterminée par la came (22), disposé suivant un axe commun au conduit (7) et à au moins un tronçon initial du passage (12) entre le clapet (8) de la soupape (2) et la came (22).

2.- Appareil de robinetterie suivant la revendication 1, caractérisé en ce que le second organe de fermeture (3, 30, 37) est un robinet à papillon (37).

3.- Appareil suivant la revendication 1, caractérisé en ce que l'obturateur rotatif (13, 33, 38) a, en substance, une forme sphérique, cet obturateur étant percé par une lumière (14) apte à venir en regard de l'entrée du passage (12), le profil de la came (22) s'étendant au moins partiellement en travers de la lumière (14) de l'obturateur (13).

4.- Appareil suivant la revendication 1, caractérisé en ce que le second organe de fermeture (3, 30, 37) est un robinet à boisseau (30), l'obturateur (33) de ce robinet (30) étant percé par une lumière (14) apte à venir en regard de l'entrée du passage, la came (22) s'étendant au moins partiellement en travers de la lumière (14) de l'obturateur (33).

5.- Appareil suivant la revendication 4, caractérisé en ce que l'obturateur (33) du robinet à boisseau (30) a, en substance, une forme cylindrique.

6.- Appareil suivant la revendication 4, caractérisé en ce que l'obturateur (33) du robinet à boisseau (30) a, en substance, une forme tronconique.

7.- Appareil suivant l'une quelconque des revendications précédentes, caractérisé en ce que le passage (12) du robinet (3, 30, 37) forme à partir de l'obturateur (12, 33, 38) un coude par rapport à son tronçon initial.

8.- Appareil suivant l'une quelconque des revendications précédentes, caractérisé en ce que l'organe de transmission (19, 24) comporte deux parties aboutées l'une à l'autre, solidaires respectivement du robinet à soupape (2) et du robinet à tournant (3, 30, 37) et soutenues chacunes par des moyens de guidage (20).

9.- Appareil suivant l'une quelconque des revendications précédentes, caractérisé en ce qu'il comporte des moyens de verrouillage (44, 45, 46) aptes à empêcher le désolidarisation du premier (2) et du second (3, 30, 37) organe de fermeture lorsqu'ils sont en position d'ouverture.

10.- Appareil suivant la revendication 9, caractérisé en ce que ces moyens de verrouillage (44, 45, 46) sont solidaires d'un organe de manoeuvre manuel (4).

11.- Appareil suivant la revendication 10, caractérisé en ce que les moyens de solidarisation démontables (11) consistent en des pièces filetées correspondantes, les moyens de verrouillage comportant au moins une dent (45) rétractable solidaire de l'organe de manoeuvre (4) et une pluralité de cran (46) ménagés sur un des moyens de solidarisation (11), de façon telle que lorsque l'organe de manoeuvre (4) est dans une position correspondant à l'ouverture de l'appareil (1), la dent rétractable (45) soit engagée dans un de ces crans (46) et empêche le déplacement relatif des moyens de solidarisation (11).

12.- Appareil suivant la revendication 11, caractérisé en ce que les moyens de verrouillage (44, 45, 46) comportent une pluralité de dents rétractables (45) disposées sur un secteur (44) de sorte que l'organe de manoeuvre (4) puisse être immobilisé par rapport aux crans (46) dans différentes positions angulaires correspondant à autant de débits relatifs de l'appareil (1).

13.- Organe de fermeture pour appareil de robinetterie à double fermeture, comportant un corps (10) traversé par un passage (12) dont au moins un tronçon initial est droit, un obturateur (13, 33, 37) pivotant dans ledit passage (12), autour d'un axe (18) perpendiculaire au tronçon initial dudit passage, un organe de manoeuvre (4) agissant sur ledit obturateur (13, 33, 37) caractérisé en ce que l'obturateur (13, 33, 37) comporte une came (22) disposée dans un plan perpendiculaire à son axe de pivotement, et un organe de transmission (19) disposé suivant l'axe du tronçon initial du passage (12) et supporté par des moyens de guidage (20) longitudinaux, de façon telle qu'il transforme en déplacements linéaires aptes à actionner un second organe de fermeture les variations de profil de la came (22), ledit profil étant tel que l'organe de transmission (19) est en élongation maximum lorsque l'organe obturateur (13, 33, 37) est en position "ouverte" et en élongation minimale lorsque l'organe obturateur est position fermée.
